# EUROPÄISCHE PATENTSCHRIFT

(11) **EP 1 017 588 B1**
(45) Veröffentlichungstag und Bekanntmachung des Hinweises auf die Patenterteilung: **07.07.2004**
(21) Anmeldenummer: 99920813.5
(22) Anmeldetag: 29.04.1999
(51) Int. Cl.: B65C 3/26

(54) **VERFAHREN UND VORRICHTUNG ZUM HERSTELLEN VON ETIKETTIERTEN KUNSTSTOFFFLASCHEN**
METHOD AND DEVICE FOR PRODUCING LABELLED PLASTIC BOTTLES
PROCEDE ET DISPOSITIF POUR PRODUIRE DES BOUTEILLES PLASTIQUES ETIQUETEES

(30) Priorität: 02.05.1998 DE 19819731
(43) Veröffentlichungstag der Anmeldung: 12.07.2000
(73) Patentinhaber: KRONES Aktiengesellschaft, D-93068 Neutraubling (DE)
(72) Erfinder: WINTER, Horst, D-93073 Neutraubling (DE)
(86) Internationale Anmeldenummer: PCT/EP1999/002898
(87) Internationale Veröffentlichungsnummer: WO 1999/057018

(56) Entgegenhaltungen:
- EP-A- 0 284 242
- EP-A- 0 597 385
- FR-A- 2 558 104

## Beschreibung

Die Erfindung betrifft ein Verfahren und eine Vorrichtung zum Herstellen von etikettierten Kunststoffflaschen.

Bei der Herstellung von etikettierten Kunststoffflaschen ist es bekannt (DE-AS 17 04 022), zunächst in einer Rotationsblasmaschine aus Rohlingen kontinuierlich Kunststoffflaschen zu erzeugen. Derartige Blasmaschinen nehmen die erwärmten Rohlinge - auch Vorformlinge genannt - in entsprechend ausgebildeten Blasformen auf, in denen diese dann während des Umlaufs der Blasmaschine unter hohem Druck und mit hoher Temperatur zu Flaschen aufgeblasen werden. Am Ausgang der Blasmaschine werden die Flaschen dann einem Auslaufstern übergeben.

Bei diesem bekannten Verfahren werden die fertiggestellten Flaschen vom Auslaufstern der Blasmaschine an einen Füller weitergegeben, der ebenfalls umlaufend arbeitet. Dort werden die Flaschen mit einer gewünschten Flüssigkeit gefüllt. Danach werden die Flaschen in einem Verschließer verschlossen und sodann zu einer Etikettiermaschine weitertransportiert. Bei diesem System ist von Nachteil, dass während des Füllens und auch noch beim Verschließen nicht immer sichergestellt werden kann, dass die zu etikettierenden Außenflächen der Flaschen sauber und trocken bleiben, was an sich eine Voraussetzung für die zuverlässige Anbringung von Etiketten ist.

Es wurde auch schon vorgeschlagen (DE-OS 26 21 993) Kunststoffflaschen taktweise aus einer Blasmaschine an ein Karussell zu übergeben, und in diesem Karussell intermittierend verschiedene Behandlungsschritte auszuführen, nämlich zunächst einen Prüfvorgang, dann das Etikettieren, dann das Drucken, dann das Füllen und schließlich das Verschließen und Einpacken. Nachteilig dabei ist, dass dieses taktweise Arbeiten keine hohen Durchsätze erlaubt.

Aufgabe der Erfindung ist es, ein Verfahren und eine Vorrichtung anzugeben, mit denen etikettierte Kunststoffflaschen mit hoher Leistung und trotzdem zuverlässigem Etikettensitz hergestellt werden können.

Zur Lösung dieser Aufgabe umfaßt das erfindungsgemäße Verfahren die im Anspruch 1 angegebenen Schritte. Die erfindungsgemäße Vorrichtung weist die Merkmale des Anspruchs 3 auf. Vorteilhafte Ausgestaltungen sind Gegenstand von Unteransprüchen.

Bei dem erfindungsgemäßen Verfahren werden die Kunststoffrohlinge, nachdem sie in der Blasmaschine, vorzugsweise einer Rotationsblasmaschine, kontinuierlich erzeugt worden sind, ohne Zwischenschaltung weiterer Behandlungsschritte unmittelbar danach, d.h. stromabwärts der Blasmaschine in kontinuierlichem Strom etikettiert, wobei lediglich gegebenenfalls der Teilungsabstand an den für das Etikettieren notwendigen Abstand angepasst werden muß. Der Vorteil dabei ist, dass durch das unmittelbare Hintereinanderschalten von Blasen und Etikettieren sichergestellt werden kann, dass die die Blasmaschine absolut trocken und sauber verlassenden Flaschen direkt im Anschluß etikettiert werden, so dass das Etikett zuverlässig auf sauberem Untergrund angebracht werden kann. Durch das kontinuierliche Arbeiten im Gegensatz zum taktweisen Arbeiten ergeben sich wesentlich höhere Flaschendurchsätze pro Stunde, also eine höhere Leistung der Anlage.

weiter ist beim erfindungsgemäßen Verfahren vorgesehen, daß die Flaschen beim Verlassen der Blasmaschine an einen Auslaufstern übergeben und dort auf den für das Etikettieren erforderlichen Teilungsabstand gebracht werden. Zur Durchführung dieser Maßnahme wird bevorzugt ein Auslaufstern eingesetzt, der mit derart steuerbaren Greifarmen für die Flaschen versehen ist, dass sich der Flaschenabstand aufeinanderfolgender Flaschen verändern lässt. Solche Transportsterne sind an sich bekannt (z.B. DE-OS 38 37 118, auf die hierzu ausdrücklich Bezug genommen wird). Eine solche Maßnahme spart trotz kontinuierlicher Arbeitsweise viel Platz und bewirkt eine effiziente Blockung von Blas- und Etikettiermaschine, weil der Auslaufstern dann vorteilhaft auch gleichzeitig als Einlaufstern für die nachgeschaltete Etikettiermaschine verwendet werden kann.

Die Vorteile der Erfindung kommen ganz besonders zum Tragen, wenn auf die Flaschen in der Etikettiermaschine ein hülsenförmig vorgeformtes Etikett aufgestülpt werden soll. Für diese sogenannten "Sleeve"-Etiketten wird im allgemeinen wärmeschrumpffähige Schlauchfolie oder eine Stretchfolie verwendet, von der hülsenförmige Abschnitte erzeugt werden. Der Hülsendurchmesser wird nur geringfügig größer als der Flaschendurchmesser an der Stelle, an der die Etiketten angebracht werden sollen, gewählt. Wenn nun die Flasche noch sauber und trocken ist, gibt es beim Aufstülpen keine Probleme mit Adhäsion der Folie an feuchten Stellen oder dgl., vielmehr läßt sich das Hülsenetikett sehr einfach und störungsunanfällig aufbringen. Anschließend erfolgt eine Fixierung auf der Flasche durch Wärmezufuhr oder mechanisches zusammenziehen aufgrund des vorhergehenden Aufweitens.

Es ist aber ebenso möglich, die Erfindung im zusammenhang mit einem Etikettieraggregat einzusetzen, das in herkömmlicher Weise Etiketten auf den Flaschen aufwickelt, beispielsweise mit vollflächiger oder teilflächiger Beleimung.

Die Erfindung wird im folgenden anhand der Zeichnungen weiter erläutert. Dabei zeigt:

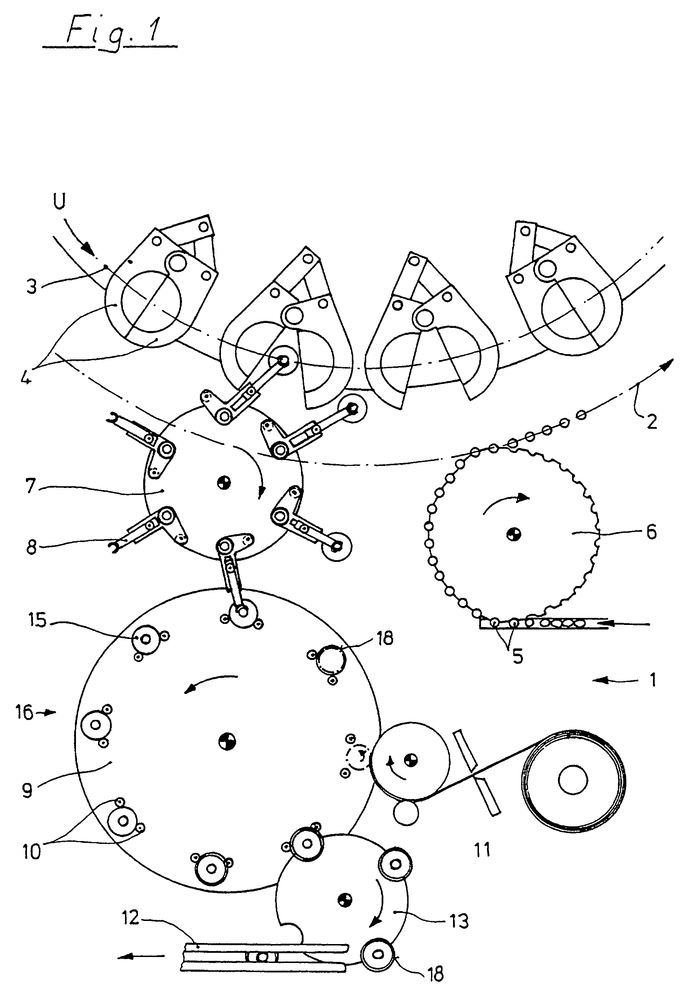

- Fig. 1: die Draufsicht auf ein erstes Ausführungsbeispiel einer erfindungsgemäßen vorrichtung.

In der Fig. 1 ist die erfindungsgemäße Vorrichtung zum Herstellen von etikettierten Kunststoffflaschen 15 insgesamt mit 1 bezeichnet. Die Vorrichtung 1 umfaßt eine Blasmaschine zur Erzeugung von Kunststoffflaschen 15, die in der Art eines Karussells aufgebaut ist und um die senkrechte Achse A dreht. Die Blasmaschine weist ein obenliegendes Heizrad 2 (nur der Teilkreis ist dargestellt) auf, dem Kunststoffrohlinge bzw. Vorformlinge 5 über einen Einlaufstern 6 zugeführt werden. Über eine nicht näher dargestellte Transfervorrichtung werden die auf dem Heizrad 2 auf die notwendige Blastemperatur erwärmten Vorformlinge an das darunter angeordnete Blasrad 3 übergeben, in dem über schließ- und öffenbare Klammern 4 die entsprechenden Formen zum Herstellen von Kunststoffflaschen gelagert sind. Beim kontinuierlichen Umlauf des Blasrades 3 in Drehrichtung U werden aus den Rohlingen 5 Kunststoffflaschen 15 erzeugt. Eine Blasmaschine dieser Art mit obenliegendem Heizrad und konzentrisch darunterliegendem Blasrad ist aus dem DE-GM 297 20 311 bekannt.

Die im Blasrad 3 fertiggestellten Kunststoffflaschen 15 werden nach Öffnen der Klammern 4 von einem in Pfeilrichtung kontinuierlich rotierenden Auslaufstern 7 übernommen. Der Auslaufstern 7 besitzt steuerbare Greifarme 8, die zusätzlich zur Umlaufbewegung schwenkbar sind, d.h. in Umlaufrichtung eine zusätzliche Geschwindigkeitskomponente erzeugen können, sowie außerdem radial verschiebbar gelagert sind, so daß sich auch in radialer Richtung eine veränderung der Flaschenposition erzeugen läßt. Mit einem solchen Auslaufstern 7 können die vom Blasrad 3 abgenommenen Flaschen 15 auf die für die nachgeordnete Etikettiermaschine 16 erforderliche Teilung gebracht werden.

Die dem Auslaufstern 7 nachgeschaltete Etikettiermaschine 16 umfasst einen Drehtisch 9, auf dem paarweise Drehrollen 10 angeordnet sind, an die die Flaschen 15 übergeben werden. Im Umfangsbereich des Drehtisches 9 ist ein Etikettieraggregat 11 angeordnet, das in an sich bekannter Weise Sleeves 18 (Etikettenhülsen aus wärmeschrumpfender Kunststoffolie) auf den Kunststoffflaschen 15 anbringt. Eine derartige Etikettiermaschine ist in der WO-OS 95/27613 beschrieben, auf die hier ausdrücklich Bezug genommen wird. Die somit unmittelbar hinter der Blasmaschine etikettierten Flaschen 15 gelangen dann über einen Auslaufstern 13 in eine Weitertransportstrecke, z.B. einen Hängeluftförderer, wie er mit 12 in Fig. 1 angedeutet ist. Sie werden von dort z.B. zur Füllmaschine verbracht.

Bei diesem Ausführungsbeispiel besitzt, wie dargelegt, der Auslaufstern 7 der Blasmaschine steuerbare Greifarme 8, so dass er die Flaschen 15 auf den Teilungsabstand der nachgeschalteten Etikettiermaschine 16 verbringen kann. Der Auslaufstern 7 stellt somit gleichzeitig den Einlaufstern der Etikettiermaschine 16 dar. Diese kompakte Bauweise ermöglicht es in besonders vorteilhafter Weise, dass die im Blasrad 3 erzeugten Flaschen 15 beim unmittelbar danach und in kontinuierlichem Strom erfolgenden Etikettiervorgang sauber und trocken sind, was den Etikettiervorgang mit dem Etikettieraggregat 11 erleichtert bzw. für ein problemloses Etikettieren sorgt. Die kompakte Bauweise verringert den apparativen Aufwand und erlaubt eine kontinuierlich im Strom erfolgende Etikettierung, so dass eine Zwischenspeicherung der Flaschen hinter dem Blasrad nicht erforderlich ist. Die kontinuierliche Arbeitsweise der Maschine ermöglicht hohe Leistungen.

## Patentansprüche

1. Verfahren zum Herstellen von etikettierten Kunststoffflaschen mit folgenden Schritten:
a) aus Kunststoffrohlingen werden in einer Blasmaschine, vorzugsweise in einer Rotationsblasmaschine, kontinuierlich Flaschen erzeugt;
b) die Flaschen werden am Auslauf der Blasmaschine an einen Auslaufstern übergeben;
c) die Flaschen werden ohne Zwischenschaltung weiterer Behandlungsschritte unmittelbar danach in kontinuierlichem Strom etikettiert, wobei ihr Teilungsabstand zuvor im Auslaufstern auf den für das Etikettieren erforderlichen Teilungsabstand gebracht wird.

2. Verfahren nach Anspruch 1, **dadurch gekennzeichnet, dass** der Auslaufstern zugleich als Einlaufstern für die Zuführung zu einer Etikettiermaschine verwendet wird.

3. Verfahren nach Anspruch 1 oder 2, **dadurch gekennzeichnet, dass** auf die Flaschen in der Etikettiermaschine ein hülsenförmig vorgeformtes Etikett aufgestülpt wird.

4. Vorrichtung zur Durchführung des Verfahrens nach Anspruch 1 mit einer Blasmaschine (2, 3) zur Erzeugung von Flaschen aus Kunststoffrohlingen (5) in kontinuierlichem Strom, mit einem im Auslauf der Blasmaschine angeordneten Auslaufstern (7) und mit einer stromabwärts der Blasmaschine angeordneten Etikettiermaschine (16), **dadurch gekennzeichnet, dass** der Auslaufstern (7) mit derart steuerbaren Greifarmen (8) versehen ist, dass sich der Flaschenabstand von aufeinanderfolgenden Flaschen verändern lässt, und dass die Etikettiermaschine (16) ohne zwischenschaltung weiterer Behandlungsaggregate unmittelbar der Blasmaschine (2, 3) derart nachgeschaltet angeordnet ist, dass die Flaschen (15) unmittelbar nach Verlassen der Blasmaschine (2, 3) in kontinuierlichem Strom etikettiert werden.

5. Vorrichtung nach Anspruch 4, **dadurch gekennzeichnet, dass** der Auslaufstern (7) gleichzeitig auch als Einlaufstern für die Etikettiermaschine (16) dient.

6. Vorrichtung nach Anspruch 4 oder 5, **dadurch gekennzeichnet, dass** die Etikettiermaschine (16) so ausgebildet ist, dass sie hülsenförmige Etiketten (18) vorzugsweise aus schrumpffähigem oder stretchbarem Kunststoff, auf die Flaschen stülpen kann.

## Claims

1. Method for producing labelled plastic bottles, comprising the following steps:
a) bottles are produced continuously from plastics blanks in a blow moulding machine, preferably in a rotary blow moulding machine;
b) at the delivery point of the blow moulding machine the bottles are passed onto a delivery star wheel;
c) immediately thereafter, without interposing any further treatment steps, the bottles are labelled in a continuous stream, the spacing between them being previously adjusted in the delivery star wheel to the requisite spacing for labelling them.

2. Method according to claim 1, **characterised in that** the delivery star wheel is at the same time used as a feeder star wheel for supplying to a labelling machine.

3. Method according to claim 1 or 2, **characterised in that** a pre-formed label in the shape of a sleeve is slipped over the bottles in the labelling machine.

4. Device for carrying out the method according to claim 1, comprising a blow moulding machine (2, 3) for producing bottles from plastics blanks (5) in a continuous stream, incorporating a delivery star wheel (7) arranged at the delivery point of the blow moulding machine, and incorporating a labelling machine (16) arranged downstream of the blow moulding machine, **characterised in that** the delivery star wheel (7) is provided with gripping arms (8) which can be controlled in such a way that the spacing between successive bottles can be varied, and that the labelling machine (16) is arranged immediately downstream of the blow moulding machine (2, 3) without any further treatment units being interposed, in such a way that the bottles (15) are labelled in a continuous stream immediately after leaving the blow moulding machine (2, 3).

5. Device according to claim 4, **characterised in that** at the same time the delivery star wheel (7) also acts as a feeder star wheel for the labelling machine (16).

6. Device according to claim 4 or 5, **characterised in that** the labelling machine (16) is configured so as to enable it to slip sleeve-like labels (18), preferably made of shrinkable or stretchable plastic, over the bottles.

## Revendications

1. Procédé pour produire des bouteilles en matière plastique étiquetées, selon les étapes suivantes :
a) à partir d'ébauches en matière plastique, des bouteilles sont produites en continu dans une machine de soufflage, de préférence une machine rotative de soufflage ;
b) les machines sortant de la machine de soufflage sont transférées à une étoile de sortie ;
c) les machines, sans que d'autres étapes de traitement soient intercalées sont directement ensuite étiquetées en flux continu et la distance qui les séparait individuellement précédemment est amenée dans l'étoile de sortie à la distance nécessaire pour l'étiquetage.

2. Procédé selon la revendication 1.
**caractérisé en ce que**
l'étoile de sortie est utilisée en même temps comme étoile d'entrée pour amener les bouteilles à une machine à étiqueter.

3. Procédé selon la revendication 1 ou 2,
**caractérisé en ce que**
dans la machine à étiqueter, une étiquette préformée en forme de douille est emmanchée sur les bouteilles.

4. Dispositif pour la mise en oeuvre du procédé selon la revendication 1, comprenant une machine de soufflage (2, 3), pour produire en flux continu des bouteilles à partir d'ébauches en matière plastique (5), une étoile de sortie (7) disposée à la sortie de la machine de soufflage et une machine à étiqueter (16) montée en aval de la machine de soufflage,
**caractérisé en ce que**
l'étoile de sortie (7) est équipée de bras de saisie (8) qui peuvent être commandés de manière à pouvoir faire varier l'espace entre bouteilles successives, la machine à étiqueter (16) étant montée sans interposition d'autres dispositifs de traitement directement en aval de la machine de soufflage (2, 3) et l'étiquetage des bouteilles (15) s'effectuant en flux continu directement à la sortie de la machine de soufflage (2, 3).

5. Dispositif pour la mise en oeuvre du procédé selon la revendication 4,
**caractérisé en ce que**
l'étoile de sortie (7) est utilisée en même temps comme étoile d'entrée pour amener les bouteilles à une machine à étiqueter (16).

6. Dispositif selon la revendication 4 ou 5,
**caractérisé en ce que**
la machine à étiqueter (16) est constituée de manière à pouvoir emmancher sur les bouteilles des étiquettes (18) en forme de douilles constituées avantageusement d'une matière plastique rétractable ou extensible.
